# EUROPEAN PATENT APPLICATION

(11) **EP 4 001 464 A1**
(43) Date of publication of application: **25.05.2022**
(21) Application number: 20207790.5
(22) Date of filing: 16.11.2020
(51) Int. Cl.: C25B 1/04, B01D 19/00, C25B 15/021, C25B 15/08

(54) **SEPARATOR FOR AN ELECTROLYSIS ARRANGEMENT**

(71) Applicant: L'Air Liquide Société Anonyme pour l'Etude et l'Exploitation des Procédés Georges Claude, 75321 Paris (FR)
(72) Inventor: Combes, Gary, 60439 Frankfurt am Main (DE)
(74) Representative: Schwenderling, Jens

(57) **Abstract**

Separator (9,10) comprising a separator chamber (11) having
▪ a first inlet (12),
▪ a second inlet (13),
▪ a gas outlet (14),
▪ a liquid outlet (15),
wherein the separator (9,10) is configured to separate a mixture of the gas and the liquid introduced into the first inlet (12) such that the gas is provided at the gas outlet (14) and the liquid is provided at the liquid outlet (15),
wherein a partition element (16) is arranged within the separator chamber (11) so as to form a channel (17) between an inner surface (18) of the separator chamber (11) and the partition element (16), wherein the second inlet (13) opens into the channel (17), and wherein the partition element (16) has a permeable section (19) arranged lower than the second inlet (13).

Due to the channel (17) the separator (9,10) can be used for an electrolysis at a particularly high temperature. Therefore, the hull (29) of the separator (9,10) does not have to be made of a particularly heat-resistant material.

## Description

The invention is directed to a separator for an electrolysis arrangement, a respective electrolysis arrangement and a method for performing an electrolysis.

On an industrial scale, electrolysis is usually performed using stacks of electrolysis cells. By means of the electrolysis cells, an electrolysis of a liquid medium can be performed. The products of the electrolysis are usually gaseous and can be extracted from the stacks together with unreacted medium. Subsequently, the gaseous products have to be separated from the liquid medium. Therefore, gas/liquid separators are known. In operation, the separators are exposed to the medium. This can cause damage to the separators due to the combination of high temperatures of the medium and/or due to corrosion. For alkaline systems, stress corrsion cracking is a key concern at temperatures > 90°C in concentrated caustic solutions. Hence, either the temperature of the medium must be reduced, which would be inefficient, or expensive materials such as nickel alloys must be used for the separators, which would be expensive. Alternatively, polymer linings of the inner surface of the separators have been suggested. However, it is difficult to obtain 100 % coverage of the inner surface that lasts the entire life of the separator.

The object of the invention is to improve the prior art so that a separator is provided that can withstand high medium temperatures without the need for expensive materials.

The object is solved with the separator, the electrolysis arrangement and the method according to the independent claims. Advantageous refinements are presented in the dependent claims. The features described in the claims and in the description can be combined with each other in any technologically reasonable manner.

According to the invention a separator is presented that comprises a separator chamber having
▪ a first inlet,
▪ a second inlet,
▪ a gas outlet,
▪ a liquid outlet,
wherein the separator is configured to separate a mixture of the gas and the liquid introduced into the first inlet such that the gas is provided at the gas outlet and the liquid is provided at the liquid outlet, wherein a partition element is arranged within the separator chamber so as to form a channel between an inner surface of the separator chamber and the partition element, wherein the second inlet opens into the channel, and wherein the partition element has a permeable section arranged lower than the second inlet.

The separator can be used to separate a gas from a liquid. The gas can be an electrolysis product obtained by electrolysis of the liquid. For example, in the electrolysis of water a respective separator can be provided to separate gaseous hydrogen from the water and to separate gaseous oxygen from the water.

The separator comprises a separator chamber. The separator chamber can be a container, in which the gas and the liquid can be contained. For example, the separator chamber can be configured as a vessel, in particular having a circular cross-section. An inner diameter of the separator chamber is preferably in the range of 0.8 to 2 m, in particular 1 to 1.6 m. A length of the separator is preferably 4 to 15 m, in particular 6 to 10 m. Preferably, the separator chamber is closed to all sides except for the inlets and outlets explicitly described herein. This applies, in particular, to a first inlet, a second inlet, a gas outlet and a liquid outlet. The first inlet can be used to introduce a mixture of the gas and the liquid into the separator chamber. The separator is configured such the mixture is separated into the gas and the liquid. The gas can be extracted from the separator chamber via the gas outlet and the liquid can be extracted from the separator chamber via the liquid outlet. The gas outlet is preferably made of nickel alloy or of a material lined with a polymer.

It is sufficient for the separator to have a single first inlet, a single second inlet, a single gas outlet and a single liquid outlet. However, it is also possible that there are multiple first inlets, multiple second inlets, multiple gas outlets and/or multiple liquid outlets. For example, the separator can be connected to multiple electrolysis stacks in that each electrolysis stack is connected to a respective first inlet of the separator.

The separator further comprises a partition element within the separator chamber. The partition element is configured and arranged such that a channel is formed between the partition element and an inner surface of the separator chamber. The channel is arranged within the separator chamber. The channel can also be referred to as a gap. Preferably, the channel is configured as an annular gap when seen in a cross-section of the separator. The partition element partly separates the channel from the remaining part of the separator chamber. The remaining part of the separator chamber is referred to as an inner section of the separator chamber. The inner section is the part of the separator chamber that is not the channel. The channel is not entirely separated from the inner section. Instead, the partition element has a permeable section. To this end, there is a connection between the channel and the inner section of the separator chamber that allows a medium exchange between the channel and the inner section. In particular, a medium can flow from within the channel via the permeable section into the inner section of the separator chamber.

Within the permeable section, the partition element is permeable for a liquid and/or for a gas. For example, the partition element can be perforated in the permeable section. The partition element can have one or more openings in the permeable section. It is also possible that the partition element comprises multiple parts that are spaced apart from each other such that gaps in between the parts form openings, by means of which the permeable section is formed. The permeable partition encourages mixing with the medium in the inner section, thus cooling down the medium in the inner section from the temperature from that of the medium entering into the inner section.

The second inlet opens into the channel. Thereby, a medium such as a liquid can be introduced into the channel. The permeable section is arranged lower than the second inlet. This refers to an orientation of the separator in normal operation. Since the separator is configured to separate a gas and a medium, the orientation of the separator naturally has an effect on the functionality of the separator. To this end, the separator is supposed to be used in a certain orientation. The separator is preferably configured to be used, in normal operation, in a horizontal orientation. That is, in normal orientation an axis of the separator is arranged horizontally.

With the second inlet being arranged above the permeable section, a fluid introduced into the channel via the second inlet can flow through the channel, through the permeable section and into the inner section of the separator chamber. This is useful, in particular, in case a fluid is introduced into the first inlet that has a comparatively high temperature, in particular higher than a temperature of the fluid introduced into the second inlet. The temperature of the hull of the separator chamber is affected mainly by the temperature of the fluid introduced into the channel via the second inlet. The fluid introduced into the first inlet, in contrast, can be collected within the inner section of the separator chamber. It is, therefore, preferred that the first inlet opens into the inner section of the separator chamber. That is, the first inlet opens into a part of the separator chamber that is not the channel. Due to the channel, the fluid within the inner section does not come into contact with the hull of the separator chamber, at least to the extent that the channel extends along the inner surface of the separator chamber. In an axial direction, the partition element preferably extends across the entire separator chamber. In a cross-section of the separator, the partition element extends preferably at least across a lower section of the separator chamber, in particular across a lower half of the separator chamber. In that case, the fluid introduced into the first inlet does not come into contact with the hull of the separator chamber as long as corresponding filling level is not exceeded. Hence, the temperature of the fluid introduced into the first inlet can be particularly high and/or a material can be used for the hull of the separator chamber that is not suitable for high temperatures. Consequently, an inexpensive material can be used for the hull of the separator chamber. The end plates or vessel caps may be made of a different metal than the vessel outer shell.

The described advantages apply, in particular, in case the separator is used for separating a gaseous electrolysis product from a liquid electrolysis medium. The mixture of the gaseous electrolysis product and the liquid electrolysis medium can be introduced into the separator chamber via the first inlet. To the extent the partition element is arranged between the inner surface of the separator chamber and the inner section of the separator chamber, the mixture of the gaseous electrolysis product and the liquid electrolysis medium does not come into contact with the hull of the separator chamber. Hence, the mixture of the gaseous electrolysis product and the liquid electrolysis medium can have a particularly high temperature. This is advantageous, because this allows the electrolysis stacks to be operated at a particularly high temperature. In general, electrolysis is more efficient at higher temperatures. For example, alkaline electrolysis can reach an efficiency of nearly 100 % at a temperature of about 120 °C. The second inlets can be used to introduce electrolysis medium from a bypass into the separator. The bypass can be configured to bypass the electrolysis stacks. The electrolysis medium that flows through the bypass has naturally a lower temperature than the electrolysis medium that flows through the stacks. Further, the bypass preferably comprises a cooler. Thereby, the medium can be cooled further. It is preferred that the medium from the bypass enters the channel via the second inlet at a temperature in the range of 30 to 60 °C, in particular in the range of 40 to 50 °C. With the low temperature medium from the bypass being introduced into the channel, only the low temperature electrolysis medium comes into contact with the hull of the separator chamber. This applies at least as far as the channel extends along the inner surface of the separator chamber. Via the permeable section, the low temperature electrolysis medium can leave the channel and mix with the electrolysis medium within the inner section of the separator chamber. Thereby, the medium within the inner section is cooled.

According to a preferred embodiment of the separator the second inlet is arranged within an upper half, in particular within an upper 30 %, of the separator and/or wherein the permeable section of the partition element is arranged within a lower half, in particular within a lower 30 %, of the separator. The "and" case is preferred.

The expressions "upper half" and "lower half" refer to the orientation of the separator in normal operation. The fact that the second inlet is arranged within the upper half means that the entire second inlet falls within the upper half of the separator. In a cross-section of the separator the upper half extends from the top of the separator to a level halfway to the bottom of the separator. Analogously, the fact that the permeable section is arranged within the lower half means that the entire permeable section falls within the lower half of the separator. In a cross-section of the separator the lower half extends from the bottom of the separator to a level halfway to the top of the separator. The upper half and the lower half adjoin each other.

In this embodiment, the second inlet is arranged above the permeable section in that the second inlet is arranged in the upper half, while the permeable section is arranged in the lower half. Thereby, the above described advantages of having the second inlet arranged above the permeable section can be achieved in a particularly pronounced manner. This is even more the case if the second inlet is arranged in an upper 30 % of the separator and the permeable section is arranged within a lower 30 % of the separator. In a cross-section of the separator the upper 30 % extends from the top of the separator to a level spaced apart from the top of the separator by 30 % of the distance from the top to the bottom of the separator. Analogously, in a cross-section of the separator the lower 30 % extends from the bottom of the separator to a level spaced apart from the bottom of the separator by 30 % of the distance from the bottom to the top of the separator. The upper 30 % of the separator and the lower 30 % of the separator are spaced apart from each other by 40 % of the height of the separator.

According to a further preferred embodiment of the separator the gas outlet is arranged within an upper half, in particular within an upper 30 %, of the separator and/or wherein the liquid outlet is arranged within a lower half, in particular within a lower 30 %, of the separator. The "and" case is preferred.

Having the gas outlet arranged within the upper half of the separator and the liquid outlet arranged within the lower half of the separator facilitates the separation of the gas and liquid. This is particularly due to the fact that gas tends to move upwards in a mixture of a gas and a liquid.

According to a further preferred embodiment of the separator the partition element is configured in a porous manner in the permeable section.

In this embodiment the partition element is made of a porous material in the permeable section. Thereby, a fluid can penetrate the permeable section from the channel into the inner section of the separator chamber.

According to a further preferred embodiment of the separator, in a cross-section of the separator, the partition element extends along at least 60 %, in particular at least 80 %, of the inner surface of the separator chamber.

The amount by which the partition element extends along the inner surface of the separator is determined by means of the edge(s) of the partition element. For each point of the edge(s) of the partition element the respective nearest point of the inner surface of the separator is determined. This does not apply to edges of the partition element formed by openings in the permeable section of the partition element. Subsequently, the area in between these nearest points on the inner surface is determined and compared to the area of the entire inner surface of the separator. In the present embodiment, this comparison yields a value of at least 60 %, in particular of at least 80 %.

According to a further preferred embodiment of the separator, in a cross-section of the separator, the partition element is symmetrical with respect to an axis oriented along a height direction.

With the partition element being symmetrical with respect to an axis oriented along a height direction, the channel extends across an entire bottom region of the separator. To that end, a fluid within the inner section of the separator chamber can be separated from the hull of the separator by means of the channel. The channel can be considered to have two branches that meet at the bottom of the separator.

In this embodiment it is preferred that the separator chamber comprises at least two second inlets. Seen in a cross-section of the separator, one of the second inlets can be arranged on the right side of the separator and one of the second inlets can be arranged on the left side of the separator. Therein, each of the second inlets can be connected to a respective branch of the channel, wherein each of the branches extends from the bottom of the separator at least to one of the separators. Thereby, the fluid introduced into the second inlets can be used to cool the entire hull of the separator below the second inlets.

According to a further preferred embodiment of the separator the partition element is arranged parallel to the inner surface of the separator chamber.

In this embodiment the channel has a constant cross-section. Thereby, a uniform flow of the fluid introduced into the second inlet can be achieved.

According to a further preferred embodiment of the separator the partition element is made of a metal comprising at least 80 % of nickel or of a plastic.

These materials can withstand comparatively high temperatures in concentrated caustic environments. Due to the channel it is sufficient that the partition element is made of such a material. The hull of the separator chamber can be made of an inexpensive material.

In particular, according to a further preferred embodiment of the separator the inner surface of the separator chamber is made at least partly of stainless steel, in particular 316 SS.

The separator chamber can be cylindrical. It is preferred that the hull of the separator comprises a jacket made of stainless steel, in particular 316 SS, and end faces made of a nickel alloy or a material lined with a polymer. The partition element can have the shape of a part of a cylinder jacket. The partition element can abut the end faces of the hull of the separator, thereby concealing the channel in an axial direction.

It is particularly preferred that the entire hull of the separator is made of stainless steel.

As a further aspect of the invention an electrolysis arrangement is described that comprises:
- at least one pump unit for driving a liquid medium,
- at least one stack of electrolysis cells, wherein each stack comprises a respective stack inlet connected to one of the pump units, a respective anode outlet and a respective cathode outlet, wherein the at least one stack is configured to obtain by electrolysis of the liquid medium introduced into the respective stack inlet a gaseous anode product provided together with the liquid medium at the respective anode outlet and a gaseous cathode product provided together with the liquid medium at the respective cathode outlet,
- an anode separator comprising a separator chamber having
   ▪ a first inlet connected to the anode outlet of the at least one stack,
   ▪ a gas outlet,
   ▪ a liquid outlet connected to one of the pump units,
   wherein the anode separator is configured to separate a mixture of the gaseous anode product and the liquid medium introduced into the first inlet of the anode separator such that the gaseous anode product is provided at the gas outlet of the anode separator and the liquid medium is provided at the liquid outlet of the anode separator,
- a cathode separator comprising a separator chamber having
   ▪ a first inlet connected to the cathode outlet of the at least one stack,
   ▪ a gas outlet,
   ▪ a liquid outlet connected to one of the pump units,
   wherein the cathode separator is configured to separate a mixture of the gaseous cathode product and the liquid medium introduced into the first inlet of the cathode separator such that the gaseous cathode product is provided at the gas outlet of the cathode separator and the liquid medium is provided at the liquid outlet of the cathode separator,
- a bypass from between the at least one pump unit and the stack inlets to a respective second inlet of at least one of the separators, wherein this at least one separator has a respective partition element arranged within the separator chamber so as to form a channel between an inner surface of the separator chamber and the partition element, wherein the second inlet opens into the channel, and wherein the partition element has a permeable section arranged lower than the second inlet.

The advantages and features of the described separator are transferrable to the described electrolysis arrangement, and vice versa. The anode separator and/or the cathode separator of the electrolysis arrangement are preferably configured as the described separator. The "and" case is preferred.

The electrolysis arrangement can be used for electrolysis of a medium. Instead of the term "electrolysis arrangement" also the term "electrolyser" could be used. Preferably, the medium is water. In that case hydrogen and oxygen can be obtained as electrolysis products. The electrolysis arrangement is intended to be used for an industrial scale electrolysis. For example, it is preferred that at least one of the electrolysis products is obtained at a rate of 250 to 1500 Nm³ per hour per stack. This applies, in particular, to the production of hydrogen in the case of water electrolysis. The electrolysis is preferably performed in an automated way.

The electrolysis arrangement comprises at least one stack, preferably multiple stacks. Preferably, the electrolysis arrangement comprises 2 to 16 stacks, in particular 2, 4 or 8 stacks. The stacks can also be referred to as electrolysis stacks. Each of the stacks comprises several electrolysis cells. Each stack has at least one stack inlet, an anode outlet and a cathode outlet. The medium can be provided to the stack via the stack inlet(s). Within the stack the electrolysis of the medium can be performed using the electrolysis cells. Thereby, an anode product and a cathode product are obtained. In the case of water as the medium the anode product is oxygen and the cathode product is hydrogen. The anode product can be extracted from the stack via the anode outlet. Thereby, however, the anode product will be mixed with the medium. Analogously, a mixture of the cathode product and the medium can be extracted from the stack via the cathode outlet.

Each of the electrolysis cells preferably comprises an anode, an anode space adjacent to the anode, a cathode and a cathode space adjacent to the cathode. The cathode space is preferably separated from the anode space by a membrane and, optionally also by the anode and the cathode. The anode outlet is preferably connected to the anode space. The cathode outlet is preferably connected to the cathode space. The membrane is preferably permeable for certain ions. For example, in the case of PEM electrolysis cells the membrane is preferably permeable for hydrogen ions (H⁺). In that case the anode and the cathode are permeable and arranged adjacent to the membrane. Also in this case it is preferred that each stack has only one stack inlet, which is connected to the cathode space. As a further example, in the case of alkaline electrolysis cells, the membrane is preferably permeable for hydroxide ions (OH). In that case each of the stacks has preferably two stack inlets: a respective anode stack inlet and a respective cathode stack inlet. The anode stack inlet is preferably connected to the anode space. The cathode stack inlet is preferably connected to the cathode space.

The anode outlet of the at least one stack is connected to the first inlet of the anode separator. In case of multiple stacks, preferably the anode outlets of all stacks are connected to the same anode separator. Preferably, there is only one anode separator. The cathode outlet of the at least one stack is connected to the first inlet of the cathode separator. In the case of multiple stacks, preferably the cathode outlets of all stacks are connected to the same cathode separator. Preferably, there is only one cathode separator.

The medium is driven by at least one pump unit. The at least one pump unit preferably has a variable flow. That is, the flow of the medium generated by the pump unit can be controlled, for example, by controlling the rotation speed of at least one pump of the at least one pump unit. In case there are multiple pump units, it is preferred that the flows of the medium generated by the pump units can be controlled independently of each other. The at least one pump unit can comprise one or more pumps. In the case of more than one pump, the pumps of a pump unit are configured such that one, some or all of the pumps of this pump unit can contribute to the flow generated by this pump unit. For example, a pump unit can have two pumps, of which one pump can be active, while the other pump is used as a backup. Alternatively, both pumps of the pump unit can be used simultaneously to avoid that one of the pumps has to be operated at its maximum power. It should be noted that the electrolysis arrangement can comprise multiple pump units, each comprising multiple pumps. To that end, the electrolysis arrangement can have, for example, four pumps, of which two form a first pump unit and the other two form a second pump unit.

In a first embodiment there is only one pump unit. In that case a pump unit outlet is connected to all stack inlets. This does not mean that the pump unit has to be connected directly to the stack inlets. In particular, a means for returning excess flow to the separators to balance the feed medium flow can be arranged in between the pump unit and the stack inlets. Between the pump unit and the stack inlets a header is provided for separating a flow of the medium provided by the pump unit into a respective flow of for each of the stacks. That is, by means of the header the flow of the medium is distributed to the stack inlets. Further, the liquid outlet of the anode separator and the liquid outlet of the cathode separator are connected to an inlet of the pump unit. This may be via an intermediate common vessel. This way, the medium can be circulated by the pump unit through the stacks and the separators. The first embodiment can be referred to as a single feed or as a common feed because the medium is fed to the stacks via only one feed line that is distributed to the stacks. In particular in this embodiment it is possible that each of the stacks has only one stack inlet. This is particularly preferred in the case of PEM electrolysis cells. Alternatively, each of the stacks can have a respective anode stack inlet and a respective cathode stack inlet. This is particularly preferred in the case of alkaline electrolysis cells. The anode stack inlet and the cathode stack inlet of a certain stack can be jointly connected to the header. That is, a respective header outlet assigned to the respective stack can be connected to both the anode stack inlet and the cathode stack inlet of this stack. To this end, the single feed does not only fan out to the individual stacks by means of the header, but further to the anode stack inlet and the cathode stack inlet. In case a stack has more than one stack inlet it is preferred that a respective control valve is arranged upstream of where a common flow assigned to this stack is divided into respective flows for the stack inlets.

In a second embodiment there are two pump units. In that case it is preferred that each of the stacks has a respective anode stack inlet and a respective cathode stack inlet. A pump unit outlet of a first of the pump units is connected to all anode stack inlets via a first header and a pump unit outlet of a second of the pump units is connected to all cathode stack inlets via a second header. This does not mean that the pump units have to be connected directly to the stack inlets. In particular, a respective means for returning excess flow to the separators to balance the feed medium flow can be arranged in between the pump unit and the respective stack inlets. The first header is provided for separating a flow of the medium provided by the first pump unit into a respective flow for each of the anode stack inlets. The second header is provided for separating a flow of the medium provided by the second pump unit into a respective flow for each of the cathode stack inlets. That is, by means of the first header a flow of the medium is distributed to the anode stack inlets and by means of the second header a flow of the medium is distributed to the cathode stack inlets. In this instance, and in particular for alkaline systems, a portion of the feed flows can be mixed in the separators to ensure a balance of electrolyte concentration is maintained. This embodiment can also be referred to as a separate feed because the medium is fed separately to the anode stack inlets and to the cathode stack inlets. In line with this, the anode separator is connected to an inlet of the first pump unit, but not to the second pump unit and the cathode separator is connected to an inlet of the second pump unit, but not to the first pump unit. That is, the medium can be circulated separately in an anode circulation and a cathode circulation.

In any case there is preferably at least one control valve per stack. Thereby, it is possible to individually control the flow of the medium into the stacks. This allows multiple stacks to be used with a single anode separator and a single cathode separator. With the electrolysis arrangement a high degree of pressure control is possible. This is advantageous because it is desired to operate the electrolysis cells at precisely controlled pressures. The membrane of the electrolysis cells is preferably largely impermeable to the medium. However, a larger pressure difference between the anode space and the cathode space can drive greater amounts of the medium through the membrane. If too much of the medium is driven through the membrane, a hydrostatic imbalance between the anode separator and the cathode separator can be the result. In order to avoid this, it is desired to control the pressure difference between the anode space and the cathode space. In particular, it is preferred that for each of the stacks a respective pressure difference between the anode space and the cathode space is smaller than 0.05 bar, in particular smaller than 0.02 bar.

The electrolysis arrangement further comprises a bypass from between the at least one pump unit and the stack inlets to a respective second inlet of at least one of the separators. Preferably, the bypass is connected to both the anode separator and the cathode separator. In case there is only one pump unit, the bypass preferably extends from a point between the pump unit and the header and, via a first outlet branch, to the anode separator and, via a second outlet branch, to the cathode separator. In case there are multiple pump units, the bypass preferably has a respective inlet branch for each of the pump units, wherein each of the inlet branches begins between the pump unit and the respective header. Also in this case the bypass preferably terminates at the anode separator via a first outlet branch and at the cathode separator via a second outlet branch.

Via the bypass the medium can flow from the pump unit outlet to the pump unit inlet without passing the stacks. Thereby, the pump unit(s) can generate a flow that is higher than required. Preferably, the bypass comprises a bypass valve. By means of the bypass valve the flow through the bypass and, in consequence, through the stacks can be adjusted particularly quickly, in particular compared to adjusting the rotation speed of one or more pumps of the pump unit. Hence, the flow control is particularly fast.

The medium flowing through the bypass usually has a lower temperature than the mixture of the medium and the electrolysis products exiting the stacks. With the medium flowing through the bypass entering the separator chamber through the second inlet, the hull of the respective separator can be separated from the warmer mixture of the medium and the electrolysis product within the inner section of the respective separator chamber. To this end, the above described advantages are achieved with the described electrolysis arrangement.

Preferably, both the anode separator and the cathode separator are configured like the above described separator. In that case the bypass is preferably arranged from between the at least one pump unit and the stack inlets to a respective second inlet of the anode separator and of the cathode separator, wherein both the anode separator and the cathode separator have a respective partition element arranged within the respective separator chamber so as to form a channel between an inner surface of the separator chamber and the partition element, wherein the second inlet opens into the channel, and wherein the partition element has a permeable section arranged lower than the second inlet.

The anode separator and the cathode separator are preferably not connected to each other except for indirect connections via the outlets and/or via the inlets of the separators. The bypass can be used to balance the medium level in the anode separator and the cathode separator.

According to a preferred embodiment of the electrolysis arrangement the electrolysis cells are configured as PEM electrolysis cells, anion exchange membrane electrolysis cells or alkaline electrolysis cells.

It was found that in particular using these electrolysis cells the described advantages can be obtained. PEM electrolysis cells are particularly preferred. In this case as well as potentially in the case of anion exchange membrane electrolysis cells the medium is water, in particular de-ionised water. In case of alkaline electrolysis cells and possibly anion exchange membrane electrolysis cells the medium is an aqueous solution of potassium hydroxide (KOH). The medium can have a KOH concentration of more than 25 %wt.

According to a further preferred embodiment of the electrolysis arrangement the stacks each have a maximum rated DC power consumption in the range of 1 to 20 MW, in particular in the range of 3 to 10 MW.

The described electrolysis arrangement is preferably used for industrial scale electrolysis. In particular, this is to be understood in contrast to experimental setups on a laboratory scale. In the present embodiment the industrial scale is quantified in terms of the maximum rated DC power consumption of the stacks. The maximum rated DC power consumption is what is commonly used to describe the electrolysis stacks. For example, a "5 MW stack" has a maximum rated DC power consumption of 5 MW.

The total maximum rated DC power consumption of the electrolysis arrangement is the sum of the respective maximum rated DC power consumptions of the stacks. The total maximum rated DC power consumption of the electrolysis arrangement is preferably in the range of 10 to 80 MW. In particular with such a total maximum rated DC power consumption it would be inefficient to have a respective anode separator and a respective cathode separator for each of the stacks, as is the case in the prior art.

As a further aspect of the invention a method is described for performing an electrolysis of a liquid medium in order to obtain a gaseous anode product and a gaseous cathode product using an electrolysis arrangement configured as described, the method comprising driving the liquid medium by means of the pump unit and applying a voltage to the electrolysis cells.

The advantages and features of the described separator and electrolysis arrangement are transferrable to the described method, and vice versa. The described separator and electrolysis arrangement are preferably configured to be used in the described method. The described method is preferably performed using the described separator, in particular in the context of the described electrolysis arrangement.

According to a preferred embodiment of the method a temperature of the liquid medium at the stack inlets is between 70 and 90 °C.

Due to the described configuration of the separator(s) it is possible to operate the stacks at comparatively high temperatures. In the present embodiment, this is quantified. Even with a temperature of the liquid medium at the stack inlets between 70 and 90 °C the temperature of the hull of the separator(s) was found to be below 85 °C.

According to a further preferred embodiment of the method a temperature of the mixture of the liquid medium and the gaseous anode product at the first inlet of the anode separator is above 85 °C and/or a temperature of the mixture of the liquid medium and the gaseous cathode product at the first inlet of the cathode separator is above 85 °C. The "and" case is preferred.

Due to the described configuration of the separator(s) it is possible to operate the separator(s) at comparatively high temperatures. In the present embodiment, this is quantified. Even with a temperature of the mixture of the liquid medium and the gaseous product at the first inlet of the separator above 85 °C, the temperature of the hull of the respective separator was found to be below 85 °C.

According to a further preferred embodiment of the method, for each of the stacks a respective desired flow of the liquid medium is determined, wherein a speed of at least one pump of the pump unit is controlled such that a flow of the liquid medium is provided by the pump unit that exceeds the sum of the desired flows for all stacks by at least 20 %.

In this embodiment the bypass is operated such that in normal operation the pump units provide a flow that exceeds the demand of the stacks. On the one hand, this results in a continuous flow into the second inlets of the separators in normal operation. On the other hand, by means of a bypass valve the flow through the bypass and, in consequence, through the stacks can be adjusted particularly quickly, in particular compared to adjusting the rotation speed of one or more of the pumps of the pump unit(s). Hence, in the present embodiment the flow control is particularly fast.

According to a further preferred embodiment of the method a pressure at the second inlet of the at least one separator that is connected to the bypass is higher than a pressure at the first inlet of this separator, in particular by at least 2 bar. Preferably, a pressure at the second inlet of the anode separator is higher than a pressure at the first inlet of the anode separator and a pressure at the second inlet of the cathode separator is higher than a pressure at the first inlet of the cathode separator.

In this embodiment the medium can be driven from the channel through the permeable section of the partition element into the inner section of the separator chamber of the respective separator. A reflow from the inner section of the separator chamber through the permeable section of the partition element into the channel can be avoided. This is advantageous in order to prevent warm fluid from the inner section of the separator chamber to enter the channel and to thereby come into contact with the hull of the separator.

In the following the invention will be described with respect to the figures. The figures show preferred embodiments, to which the invention is not limited. The figures and the dimensions shown therein are only schematic. The figures show:
- Fig. 1:: an electrolysis arrangement according to the invention, and
- Fig. 2:: a cross-section of the separators of the electrolysis arrangement of Fig. 1.

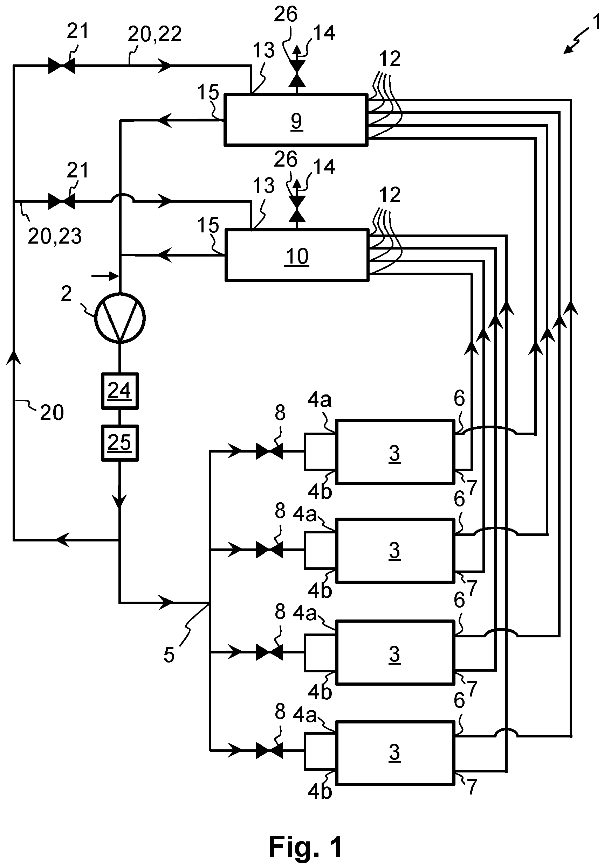

Fig. 1 shows an electrolysis arrangement 1 that comprises multiple stacks 3 of electrolysis cells. The electrolysis cells may be configured as PEM electrolysis cells, anion exchange membrane electrolysis cells or alkaline electrolysis cells. The stacks 3 each have a maximum rated DC power consumption in the range of 1 to 20 MW. Also, the electrolysis arrangement 1 comprises a pump unit 2 for driving a medium. In the present embodiment there is only one pump unit 2. Hence, the present embodiment can be referred to as a single feed. Instead of the single feed shown in Fig. 1, the electrolysis arrangement could also be configured as a separate feed (not shown in the figures).

The pump unit 2 comprises a centrifugal pump configured to provide an adjustable flow of the medium. In the embodiment of Fig. 1, the pump unit 2 comprises a single pump only. Each stack 3 comprises two stack inlets 4a,4b that are connected to the pump unit 2 via a header 5 for separating a flow of the medium provided by the pump unit 2 into a respective flow for each of the stacks 3. Between the pump unit 2 and the header 5 a cooler 24 and a filter 25 are arranged. Further, each stack 3 comprises a respective anode outlet 6 and a respective cathode outlet 7. The stacks 3 are configured to obtain by electrolysis of the medium introduced into the respective stack inlets 4a,4b an anode product provided together with the medium at the respective anode outlet 6 and a cathode product provided together with the medium at the respective cathode outlet 7.

Further, the electrolysis arrangement 1 comprises a respective control valve 8 for each of the stacks 3 arranged between the header 5 and the respective stack inlets 4a,4b, wherein the control valves 8 are configured to individually control a flow of the medium into the respective stack 3. This does not necessarily mean that the flow into the anode stack inlet 4a can be controlled independently of the flow into the cathode stack inlet 4b. In the embodiment according to Fig. 1 this is not possible because the flow assigned to a certain stack 3 is divided into separate flows for the anode stack inlet 4a and the cathode stack inlet 4b downstream of the control valve 8. Nevertheless, the flow into the stack inlets 4a,4b of one stack 3 can be controlled independently of the flow into the stack inlets 4a,4b of the other stacks 3.

The electrolysis arrangement 1 further comprises an anode separator 9 having a liquid outlet 15 that is connected to the pump unit 2. Each of the anode outlets 6 of the stacks 3 is connected to a respective first inlet 12 of the anode separator 9. The anode separator 9 is configured to separate the gaseous anode product from the liquid medium introduced into the first inlets 12 of the anode separator 9 such that the anode product is provided at a gas outlet 14 of the anode separator 9 and the medium is provided at the liquid outlet 15 of the anode separator 9. The pressure of the anode separator 9 is controlled by a control valve 26. The electrolysis arrangement 1 further comprises a cathode separator 10 having a liquid outlet 15 that is connected to the pump unit 2. Each of the cathode outlets 7 of the stacks 3 is connected to a respective first inlet 12 of the cathode separator 10. The cathode separator 10 is configured to separate the gaseous cathode product from the liquid medium introduced into the first inlets 12 of the cathode separator 10 such that the gaseous cathode product is provided at a gas outlet 14 of the cathode separator 10 and the liquid medium is provided at the liquid outlet 15 of the cathode separator 10. The pressure of the cathode separator 10 is controlled by a control valve 26. The operation of the control valves 26 are such that the pressure difference is minimized between the two separators 9,10.

The electrolysis arrangement 1 further comprises a bypass 20 from a point between the pump unit 2 and the header 5 to the anode separator 9 and to the cathode separator 10. The bypass 20 has an anode branch 22 connected to a second inlet 13 of the anode separator 9 and a cathode branch 23 connected to a second inlet 13 of the cathode separator 10. Both the anode branch 22 and the cathode branch 23 of the bypass 20 comprise a respective bypass valve 21.

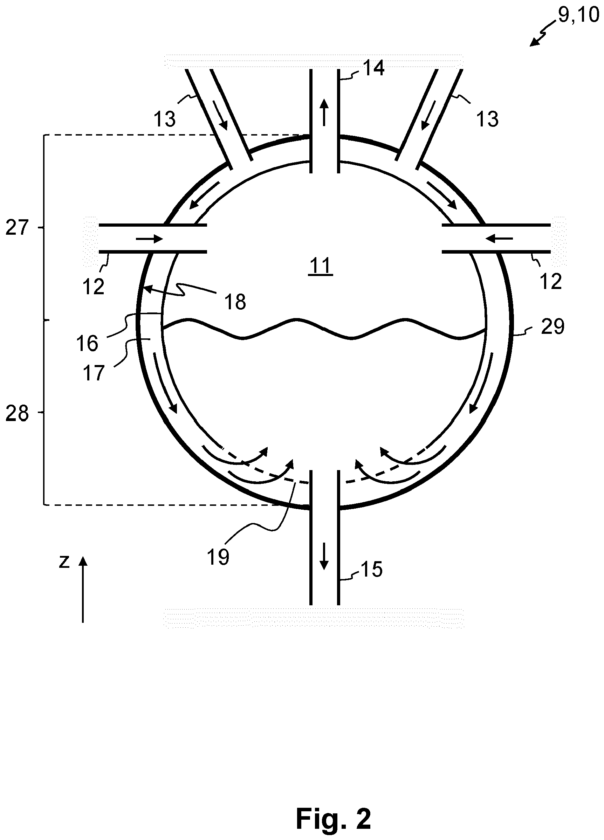

Fig. 2 shows a cross-section of a separator 9,10 according to the invention. The anode separator 9 and/or the cathode separator 10 of the electrolysis arrangement 1 of Fig. 1 can be configured according to the embodiment of Fig. 2. The separator 9,10 comprises a separator chamber 11 within a hull 29. The separator chamber 11 has two first inlets 12, two second inlets 13, a gas outlet 14 and a liquid outlet 15. The separator 9,10 is configured to separate a mixture of the gas and the liquid introduced into the first inlets 12 such that the gas is provided at the gas outlet 14 and the liquid is provided at the liquid outlet 15. The separator 9,10 further comprises a partition element 16 that is arranged within the separator chamber 11 so as to form a channel 17 between an inner surface 18 of the separator chamber 11 and the partition element 16. The second inlets 13 open into the channel 17. In particular, one of the second inlets 13 opens into a left branch of the channel 17 and the other second inlet 13 opens into a right branch of the channel 17. The partition element 16 has a permeable section 19 arranged lower than the second inlets 13. This refers to the orientation of the separator 9,10 in normal operation, which is shown in Fig. 2. A corresponding height direction z is indicated. In the permeable section 19, the partition element 16 is configured in a porous manner.

The second inlets 13 are arranged within an upper half 27 of the separator 9,10 and the permeable section 19 of the partition element 16 is arranged within a lower half 28 of the separator 9,10. The gas outlet 14 is arranged within the upper half 27 of the separator 9,10 and the liquid outlet 15 is arranged within the lower half 28 of the separator 9,10.

In the cross-section shown in Fig. 2, the partition element 16 extends along the entire inner surface 18 of the separator chamber 11, except for where the partition element 16 is interrupted by the first inlets 12, the gas outlet 14 and the liquid outlet 15. It should be noted that the first inlets 12, the gas outlet 14 and the liquid outlet 15 have an extension in an axial direction (which is perpendicular to the drawing plane of Fig. 2) that is smaller than an axial extension of the channel 17 in this direction. That is, although the channel 17 is locally interrupted by the first inlets 12, the gas outlet 14 and the liquid outlet 15, the different sections of the channel 17 are connected fluidly with each other outside the drawing plane of Fig. 2. In the cross-section shown in Fig. 2 the partition element 16 is symmetrical with respect to an axis oriented along the height direction z. The partition element 16 is arranged parallel to the inner surface 18 of the separator chamber 11.

Due to the channel 17 the separator 9,10 can be used for an electrolysis at a particularly high temperature. Therefore, the hull 29 of the separator 9,10 does not have to be made of a particularly heat-resistant material.

### List of reference numerals

- 1: electrolysis arrangement
- 2: pump
- 3: stack
- 4a: anode stack inlet
- 4b: cathode stack inlet
- 5: header
- 6: anode outlet
- 7: cathode outlet
- 8: control valve
- 9: anode separator
- 10: cathode separator
- 11: separator chamber
- 12: first inlet
- 13: second inlet
- 14: gas outlet
- 15: liquid outlet
- 16: partition element
- 17: channel
- 18: inner surface
- 19: permeable section
- 20: bypass
- 21: bypass valve
- 22: anode branch
- 23: cathode branch
- 24: cooler
- 25: filter
- 26: control valve
- 27: upper half
- 28: lower half
- 29: hull

- z: height direction

## Claims

1. Separator (9,10) comprising a separator chamber (11) having
▪ a first inlet (12),
▪ a second inlet (13),
▪ a gas outlet (14),
▪ a liquid outlet (15),
wherein the separator (9,10) is configured to separate a mixture of the gas and the liquid introduced into the first inlet (12) such that the gas is provided at the gas outlet (14) and the liquid is provided at the liquid outlet (15),
wherein a partition element (16) is arranged within the separator chamber (11) so as to form a channel (17) between an inner surface (18) of the separator chamber (11) and the partition element (16), wherein the second inlet (13) opens into the channel (17), and wherein the partition element (16) has a permeable section (19) arranged lower than the second inlet (13).

2. Separator (9,10) according to claim 1, wherein the second inlet (13) is arranged within an upper half of the separator (9,10) and/or wherein the permeable section (19) of the partition element (16) is arranged within a lower half of the separator (9,10).

3. Separator (9,10) according to any of the preceding claims, wherein the gas outlet (14) is arranged within an upper half of the separator (9,10) and/or wherein the liquid outlet (15) is arranged within a lower half of the separator (9,10).

4. Separator (9,10) according to any of the preceding claims, wherein the partition element (16) is configured in a porous manner in the permeable section (19).

5. Separator (9,10) according to any of the preceding claims, wherein in a cross-section of the separator (9,10) the partition element (16) extends along at least 60 % of the inner surface (18) of the separator chamber (11).

6. Separator (9,10) according to any of the preceding claims, wherein in a cross-section of the separator (9,10) the partition element (16) is symmetrical with respect to an axis oriented along a height direction (z).

7. Separator (9,10) according to any of the preceding claims, wherein the partition element (16) is arranged parallel to the inner surface (18) of the separator chamber (11).

8. Separator (9,10) according to any of the preceding claims, wherein the partition element (16) is made of a metal comprising at least 80 % of nickel or of a plastic.

9. Separator (9,10) according to any of the preceding claims, wherein the inner surface (18) of the separator chamber (11) is made of stainless steel.

10. Electrolysis arrangement (1) comprising:
- at least one pump unit (2) for driving a liquid medium,
- at least one stack (3) of electrolysis cells, wherein each stack (3) comprises a respective stack inlet (4a,4b) connected to one of the pump units (2), a respective anode outlet (6) and a respective cathode outlet (7), wherein the at least one stack (3) is configured to obtain by electrolysis of the liquid medium introduced into the respective stack inlet (4a,4b) a gaseous anode product provided together with the liquid medium at the respective anode outlet (6) and a gaseous cathode product provided together with the liquid medium at the respective cathode outlet (7),
- an anode separator (9) comprising a separator chamber (11) having
▪ a first inlet (12) connected to the anode outlet (6) of the at least one stack (3),
▪ a gas outlet (14),
▪ a liquid outlet (15) connected to one of the pump units (2),
wherein the anode separator (9) is configured to separate a mixture of the gaseous anode product and the liquid medium introduced into the first inlet (12) of the anode separator (9) such that the gaseous anode product is provided at the gas outlet (14) of the anode separator (9) and the liquid medium is provided at the liquid outlet (15) of the anode separator (9),
- a cathode separator (10) comprising a separator chamber (11) having
▪ a first inlet (12) connected to the cathode outlet (7) of the at least one stack (3),
▪ a gas outlet (14),
▪ a liquid outlet (15) connected to one of the pump units (2),
wherein the cathode separator (10) is configured to separate a mixture of the gaseous cathode product and the liquid medium introduced into the first inlet (12) of the cathode separator (10) such that the gaseous cathode product is provided at the gas outlet (14) of the cathode separator (10) and the liquid medium is provided at the liquid outlet (15) of the cathode separator (10),
- a bypass (20) from between the at least one pump unit (2) and the stack inlets (4a,4b) to a respective second inlet (13) of at least one of the separators (9,10), wherein this at least one separator (9,10) has a respective partition element (16) arranged within the separator chamber (11) so as to form a channel (17) between an inner surface (18) of the separator chamber (11) and the partition element (16), wherein the second inlet (13) opens into the channel (17), and wherein the partition element (16) has a permeable section (19) arranged lower than the second inlet (13).

11. Method for performing an electrolysis of a liquid medium in order to obtain a gaseous anode product and a gaseous cathode product using an electrolysis arrangement (1) according to claim 10, the method comprising driving the liquid medium by means of the pump unit (2) and applying a voltage to the electrolysis cells.

12. Method according to claim 11, wherein a temperature of the liquid medium at the stack inlets (4a,4b) is between 70 and 90 °C.

13. Method according to claim 11 or 12, wherein a temperature of the mixture of the liquid medium and the gaseous anode product at the first inlet (12) of the anode separator (9) is above 85 °C and/or wherein a temperature of the mixture of the liquid medium and the gaseous cathode product at the first inlet (12) of the cathode separator (10) is above 85 °C.

14. Method according to any one of claims 11 to 13, wherein for each of the stacks (3) a respective desired flow of the liquid medium is determined, and wherein a speed of at least one pump of the pump unit (2) is controlled such that a flow of the liquid medium is provided by the pump (2) that exceeds the sum of the desired flows for all stacks (3) by at least 20 %.

15. Method according to any one of claims 11 to 14, wherein a pressure at the second inlet (13) of the at least one separator (9,10) that is connected to the bypass (20) is higher than a pressure at the first inlet (12) of this separator (9,10).
